# FASCICULE DE BREVET EUROPEEN

(11) **EP 3 046 719 B1**
(45) Date de publication et mention de la délivrance du brevet: **28.11.2018**
(21) Numéro de dépôt: 14784316.3
(22) Date de dépôt: 19.09.2014
(51) Int. Cl.: B23K 26/00, B23K 26/06, B23K 26/26, B23K 26/40, G02C 7/02

(54) **DISPOSITIF ET PROCEDE DE MARQUAGE D'UNE LENTILLE OPHTALMIQUE AVEC UN LASER PULSE DE LONGUEUR D'ONDE ET ENERGIE PAR IMPULSION SELECTIONNEES**
VORRICHTUNG UND VERFAHREN ZUR MARKIERUNG EINER OPHTHALMISCHEN LINSE MIT GEPULSTEM LASER MIT PRO PULS AUSGEWÄHLTER LÄNGENWELLE UND ENERGIE
DEVICE AND PROCESS FOR MARKING AN OPHTHALMIC LENS WITH A PULSED LASER OF WAVELENGTH AND ENERGY SELECTED PER PULSE

(30) Priorité: 20.09.2013 FR 1359081
(43) Date de publication de la demande: 27.07.2016
(60) Demande divisionnaire: 18195789.5
(73) Titulaire: Essilor International, 94220 Charenton-le-Pont (FR)
(72) Inventeur: MAURICE, Sébastien, F-94227 Charenton le Pont Cedex (FR); DUBOIS, Frédéric, F-94227 Charenton le Pont Cedex (FR)
(74) Mandataire: Santarelli
(86) Numéro de dépôt international: PCT/FR2014/052338
(87) Numéro de publication internationale: WO 2015/040338

(56) Documents cités:
- DE-A1-102010 010 337
- US-A1- 2001 037 105
- US-A1- 2002 003 605
- US-A1- 2007 199 927
- US-A1- 2008 051 012

## Description

La présente demande a trait à dispositif de marquage de lentille ophtalmique conformément au préambule de la revendication 1 (voir, par exemple, DE 10 2010 010 337 A1), et un procédé de marquage de lentilles ophtalmiques mettant en oeuvre un tel dispositif, voir revendication 14.

Plus particulièrement, elle a trait au marquage permanent, notamment de verres ophtalmiques.

On sait que les lentilles ophtalmiques, comme des verres de lunettes ou une visière par exemple, sont soumises à différentes étapes de fabrication. Les procédés de fabrication généralement employés pour obtenir une lentille finie et taillée à la forme d'une monture particulière comportent typiquement des étapes au cours desquelles la lentille ophtalmique reçoit sur une face des marquages, dits permanents.

Les marquages permanents techniques peuvent être formés par gravures, ou micro-gravures, représentant des points ou des croix et identifiant un point particulier (par exemple le centre optique de la lentille ophtalmique ou le point de référence de prisme pour une lentille progressive), ou des traits d'axes (par exemple pour indiquer l'axe horizontal selon lequel l'astigmatisme est corrigé), ou des formes délimitant une zone particulière (par exemple, la zone de vision de près ou la zone de vision de loin dans le cas d'une lentille progressive).

De même, il peut être nécessaire d'effectuer des marquages relatifs à l'identification de la lentille ou autres marquages permanents dits commerciaux, gravés sur une lentille finie, soit sur un vernis, un empilement antireflets, ou directement sur le substrat, après réalisation des dernières étapes de procédé de fabrication de la lentille finie.

Ces marquages permanents, techniques ou commerciaux, sont souvent réalisés sur une face, face avant ou face arrière, de la lentille ophtalmique. La face arrière est souvent concave, alors que la face avant est souvent convexe, mais l'inverse est possible.

On connait par exemple des procédés de marquage par retrait de matière. De tels procédés sont configurés pour agir sur la surface d'une face de la lentille en retirant une petite quantité de matière par impulsions d'un rayon laser. En effet, un marquage est généralement formé d'une suite de points (nommés aussi « spot »), chaque point étant réalisé par une ou plusieurs impulsion(s) du laser.

Parmi ces procédés, on connait des procédés thermiques permettant un enlèvement de matière par brûlage, comme les procédés par laser au dioxyde de carbone (laser CO₂). Dans un tel procédé, l'interaction entre un rayonnement laser infrarouge (IR) ou proche-infrarouge émis, en continu ou par impulsion par le laser, et un matériau constitutif de la lentille absorbant les rayons donne lieu au processus thermique suivant : absorption des rayons par le matériau, diffusion de chaleur dans le matériau, fusion du matériau puis vaporisation du matériau. Ainsi, si les impulsions sont relativement longues, la quantité de matériau retirée est élevée et une plus grande zone de la lentille, en volume, est affectée thermiquement. Or, si le matériau de la lentille est affecté thermiquement, ses propriétés sont modifiées. Il est donc généralement préférable d'avoir une zone affectée thermiquement (ZAT) la plus faible possible. Les procédés thermiques sont en outre souvent corrélés à des problèmes de déformation de matière au niveau des points d'ablation. En effet, le processus thermique avant retrait de matière est suffisamment lent pour que la zone affecté thermiquement soit importante, formant par conséquent des zones de matière déformée.

On connait aussi par exemple des procédés de marquage par ablation, et en particulier photo-ablation, aussi appelé photochimiques, comme les procédés par laser Excimer. Dans un tel procédé, un rayonnement laser ultraviolet (UV) interagissant avec un matériau absorbant de la lentille (généralement un polymère) conduit à un processus de décomposition chimique. Contrairement à un photon infrarouge (IR), l'énergie d'un photon ultraviolet (UV) est suffisante pour casser une liaison covalente. Ainsi, plus le matériau absorbe de photons UV, moins il y aura d'effets thermiques et inversement. Un rayonnement par rayons UV permet aussi de diminuer la taille des points et d'avoir une meilleure absorption des rayons par le matériau de la lentille.

Parmi les procédés de marquage par ablation, on connait également des procédés de marquage dits ultrabrefs, comme les procédés à laser « femtoseconde » (10⁻¹⁵ seconde) ou « picoseconde » (10⁻¹² seconde). Dans un procédé « picoseconde », pour une durée d'impulsion inférieure à 5 ps (picosecondes), il n'y a presque pas de diffusion thermique en dehors du volume de la lentille irradié car la matière ablatée emporte avec elle l'excès de chaleur. Pour comparaison, dans un procédé de type laser CO₂, la durée des impulsions est de l'ordre de 1 ms (millisecondes). La quantité de matériau retirée par impulsion dans un procédé de marquage ultrabref est relativement faible mais la qualité du marquage est améliorée, notamment par rapport à un procédé thermique. Les impulsions générées lors des procédés ultrabrefs ont une forte intensité (de l'ordre de quelques GW/cm², alors qu'elles sont de l'ordre de 18 MW/cm² dans un procédé à laser Excimer ou de l'ordre de 3 kW/cm² dans un procédé à laser CO₂). Ces impulsions ultrabrèves permettent ainsi, grâce à un mécanisme d'absorption multiphotonique non linéaire, de marquer des matériaux transparents, par exemple diélectriques, en surface.

Autrement dit, les procédés thermiques travaillant dans l'infrarouge conduisent à une importante zone affectée thermiquement, alors que les procédés ultrabrefs travaillant également dans l'infrarouge, mais aussi dans le visible ou l'ultraviolet, engendrent une très petite zone affectée thermiquement. Les procédés à laser Excimer travaillant dans l'ultraviolet permettent eux aussi d'obtenir une assez petite zone affectée thermiquement.

Par ailleurs, les procédés par laser Excimer ou « Femto » sont des procédés relativement chers. En outre, les procédés par laser Excimer ont un fort impact environnemental. Les procédés à laser CO₂ sont bien moins coûteux, mais ils engendrent des problèmes liés aux processus thermiques évoqués précédemment.

La présente invention vise par conséquent à proposer un dispositif dont la source est moins coûteuse, aisée en maintenance, limitant les contraintes environnementales, permettant un mécanisme de gravure par ablation et menant en outre à d'autres avantages.

Un dispositif de marquage de lentille ophtalmique ladite lentille ophtalmique étant réalisée en au moins un matériau prédéterminé conformément à la présente invention est défini dans la revendication 1, le dispositif comportant un laser configuré pour réaliser des gravures permanentes sur la lentille ophtalmique et étant caractérisé en ce que le laser est configuré pour émettre un faisceau focalisé de rayonnement laser ultraviolet par impulsions, le faisceau focalisé comportant au moins les paramètres suivants :
- une longueur d'onde de rayonnement comprise entre 200 nm et 300 nm,
- une durée d'impulsion comprise entre environ 0,1 ns et environ 5 ns, et
- une énergie par impulsion comprise entre environ 5 µJ et environ 100 µJ.

Un des intérêts majeurs d'un tel dispositif est de pouvoir réaliser des marquages techniques ou commerciaux indifféremment sur une surface, finie ou non, de la lentille.

L'invention s'applique par exemple de façon avantageuse aux marquages dits "techniques", correspondant aux marquages imposés par la norme ISO 8980-2 au paragraphe 7.1, et de préférence les marquages des paragraphes 7.1a) et 7.1b) et gravés sur le matériau du substrat de la lentille, rapidement après réalisation de la géométrie de la lentille.

L'invention s'applique aussi par exemple aux marquages commerciaux, tels que des logos ou désignations de marques ou des marquages correspondant aux marquages imposés par la norme ISO 8980-2 au paragraphe 7.1c).

Le dispositif selon l'invention permet en outre de réaliser des marquages sur des matériaux très différents.

Selon un mode de réalisation intéressant, le faisceau focalisé comporte en outre au moins un des paramètres suivants :
- une fréquence d'impulsions comprise entre environ 100 Hz et environ 10 kHz, et/ou
- une puissance crête comprise entre environ 2,5 kW et environ 1 MW.

Selon un exemple de réalisation intéressant, le dispositif est configuré pour que le faisceau de rayonnement laser ultraviolet focalisé comporte au moins l'un des paramètres suivants :
- la longueur d'onde de rayonnement du faisceau laser ultraviolet focalisé est comprise entre environ 230 nm et environ 290 nm, préférentiellement environ 266 nm, et/ou
- la fréquence d'impulsions comprise entre environ 100 Hz et environ 1 kHz, et/ou
- la puissance crête comprise entre environ 10 kW et environ 100 kW, et/ou
- la durée d'impulsion comprise entre environ 0,1 ns et environ 2 ns, et/ou
- l'énergie par impulsion comprise entre environ 10 µJ et environ 60 µJ.

On entend ici par puissance crête, la puissance instantanée du laser lors d'une impulsion. Elle s'oppose par exemple à la puissance dite « efficace » qui est une moyenne de la puissance dans le temps ; celle-ci est donc généralement bien plus faible puisqu'elle est par définition nulle entre les impulsions.

Selon un mode de réalisation privilégié, le dispositif comporte une source laser à milieu solide configurée pour émettre un faisceau de rayonnement infrarouge par impulsions, et un multiplicateur, positionné en sortie de la source laser, configuré pour multiplier une fréquence de rayonnement du faisceau infrarouge émis en sortie de la source laser, préférentiellement par un facteur compris entre trois et dix.

On entend dans le cadre de l'invention, par source laser à milieu solide une source laser dont le milieu amplificateur, dit aussi milieu actif, est soit un cristal solide ou ionique soit une fibre optique. Les sources laser à milieu solide sont ainsi différentes des lasers ayant un milieu amplificateur liquide ou gazeux. En anglais, le terme désignant les lasers solides est "solide-state laser".

En effet, ces sources laser sont généralement de maintenance plus facile et de coût moindre que des sources lasers à milieu liquide ou gazeux, par exemple que les sources de type Excimer.

Le facteur de multiplication est ici choisi comme valant quatre, mais il peut, de façon générale, en fonction de la longueur d'onde initiale de la source laser, être un facteur compris entre trois et dix inclus, préférentiellement entre trois et cinq.

Le multiplicateur est configuré pour former, par couplage avec la source laser, un faisceau de rayonnement laser ultraviolet ayant une longueur d'onde comprise entre environ 200 nm et environ 300 nm, encore préférentiellement entre environ 208 nm et environ 220 nm, par exemple environ 213 nm ou environ 210 nm ou environ 209,4 nm ou encore entre environ 260 nm et environ 270 nm, par exemple environ 261,7 nm ou environ 263 nm ou environ 266 nm.

La source laser et le multiplicateur sont deux éléments qui peuvent être distincts, ou réunis dans un même boitier. Le cas échéant, la combinaison d'un laser a-solide avec un multiplicateur au sein d'un même boitier donne un dispositif possiblement très compact, donc transportable et transposable à souhait, aussi bien sur une chaine de production qu'en laboratoire par exemple.

Les coûts d'achat et de fonctionnement (maintenance, durée de vie) sont modérés par rapport aux dispositifs existants de source laser à rayonnement ultraviolet à milieu liquide ou gazeux, traditionnellement utilisés, par exemple en particulier le laser de type Excimer, de sorte que le dispositif selon l'invention est particulièrement simple, commode et économique.

La source laser est par exemple un laser Nd-YAG et le multiplicateur est par exemple configuré pour quadrupler la fréquence d'impulsions en sortie du laser ND-YAG.

Une source ND-YAG, peut émettre principalement un faisceau à la longueur d'onde 1064 nm, ce qui permet en la couplant à un quadrupleur, c'est-à-dire un multiplicateur de facteur quatre, d'obtenir un faisceau de rayonnement laser avec longueur d'onde d'environ 266 nm, ou environ 213 nm avec un quintupleur, c'est-à-dire un multiplicateur de facteur cinq.

Selon un exemple particulier de réalisation, le laser Nd-YAG avec un multiplicateur est de type Crylas UVlaser eco mopa (266nm).

Selon une alternative, la source laser est par exemple un laser Nd-YVO4. Une telle source laser émet par exemple un rayonnement d'une longueur d'onde d'environ 1064 nm, ce qui couplée à un quadrupleur permet d'obtenir des faisceaux lasers de longueur d'onde d'environ 266 nm, ou environ 213 nm avec un quintupleur.

Selon encore autre une alternative, la source laser est par exemple un laser Nd-YLF. Une telle source laser émet par exemple un rayonnement d'une longueur d'onde d'environ 1047 nm ou un rayonnement d'une longueur d'onde d'environ 1053 nm selon son mode de fonctionnement, ce qui couplé à un quadrupleur permet d'obtenir des faisceaux lasers de longueur d'onde d'environ 262 nm ou 263 nm ou encore environ 209 nm ou 210 nm avec un quintupleur.

De manière générale la source et le multiplicateur sont configurés pour émettre un rayonnement ultraviolet compris entre 10 et 120 µJ.

De préférence ici, selon des dispositions particulières, la source laser est configurée pour émettre un faisceau laser de rayonnement par impulsions ayant une énergie par impulsion comprise entre environ 30 µJ et environ 80 µJ, préférentiellement supérieure à 40 µJ. L'énergie du faisceau de rayonnement ultraviolet focalisé serait alors comprise entre environ 5 µJ et environ 65 µJ.

Conformément à l'invention, le dispositif comporte un bloc optique pourvu d'une lentille F-thêta, laquelle est configurée pour focaliser un faisceau de rayonnement laser ultraviolet dans un plan de focalisation de la lentille F-thêta avec un diamètre de faisceau focalisé dans le plan de focalisation de l'ordre d'environ 20 µm à environ 50 µm, par exemple 30 µm.

La lentille F-thêta est conformément à l'invention localisée en sortie du bloc optique.

On désigne ici par lentille F-thêta une lentille à champ plat, qui par définition présente un plan de focalisation à une distance dite distance de focalisation. La distance de focalisation est par exemple d'environ 160 mm dans un exemple de mise en oeuvre préféré mais peut plus généralement être comprise entre 100 mm et 200 mm.

En général, le point effectivement gravé par le faisceau focalisé sur une surface de la lentille ophtalmique présente un diamètre inférieur à celui du faisceau focalisé incident sur une surface de la lentille ophtalmique, laquelle est généralement placée dans le plan de focalisation. En l'occurrence, le diamètre du point gravé serait par exemple de 15 µm à 30 µm environ.

Conformément à l'invention, le bloc optique comporte un atténuateur d'énergie configuré pour régler une fluence du faisceau de rayonnement ultraviolet focalisé sur une surface de la lentille ophtalmique à marquer selon plusieurs modes de fonctionnement de l'atténuateur, lesquels modes définissent chacun une valeur de fluence déterminée.

La fluence, comme le sait l'homme du métier, correspond à l'énergie par impulsion du faisceau incident sur la surface de la lentille par unité de surface insolée.

Autrement dit, l'atténuateur a plusieurs modes de fonctionnement, il est configuré pour avoir plusieurs niveaux d'atténuation. Il est modulable, c'est-à-dire ajustable, soit de façon continue soit par incréments. Selon le matériau visé de la lentille, il est ainsi possible d'ajuster la fluence du faisceau à appliquer, en ajustant ici l'énergie par impulsion en sortie de l'atténuateur.

Les modes de fonctionnement de l'atténuateur et/ou les valeurs de fluence déterminées pour les modes de fonctionnement sont définis à partir d'au moins un paramètre du matériau de la lentille ophtalmique choisi parmi un paramètre de dégradation et une absorbance à la longueur d'onde du rayonnement ultraviolet.

Une table de performance est par exemple obtenue par étalonnage de l'atténuateur en fonction de différents matériaux, par exemple en gravant quelques marquages, en mesurant la visibilité obtenue pour plusieurs valeurs de fluence, à l'oeil et par des systèmes de vision telle qu'une caméra, un microscope ou encore des machines d'alignement et de contrôle.

Le même dispositif est ainsi apte à réaliser aussi bien des marquages techniques sur le substrat d'une lentille, avant ou après polissage, que des marquages commerciaux sur une surface de la lentille finie, c'est-à-dire après polissage et traitement fonctionnel, du type HMC (pour « Hard Multi Coat » qui signifie "revêtement dur multi-couches") ou coloration par imbibition le cas échéant. En effet, au moyen de l'atténuateur et d'une table de performance retraçant une visibilité et/ou une efficacité de marquage pour différents matériaux, il est possible de marquer des matériaux très différents avec, à chaque fois une fluence optimale, et ce, sans changer de dispositif ni procéder à de coûteux ajustements de la puissance émise par la source laser.

Les traitements fonctionnels sont définis dans l'invention comme comprenant tous les traitements apportant une fonction utile à un porteur de lunettes et réalisés sur au moins une face de la lentille ophtalmique. Ils comprennent ici une coloration de la surface de la lentille, et/ou un ou plusieurs traitements de vernissage, et/ou possiblement aussi un traitement de type antireflets.

Les traitements dits "de vernissage" peuvent comprendre ici le dépôt d'une ou plusieurs couches de vernis d'adhérence et/ou antichocs, connue(s) par l'homme de l'art sous le nom anglais de "primer", une couche d'anti-rayure, connue par l'homme de l'art sous le nom anglais de "hard coat". Les traitements de vernissage peuvent inclure, dans le cadre de l'invention, le dépôt possible d'une couche d'adaptation d'impédance optique entre deux vernis et/ou entre le substrat et un vernis afin de limiter la formation de franges d'interférence, puisque cette couche n'a un intérêt que si au moins un vernis a été déposé sur le substrat.

Les traitements dits "antireflets" peuvent inclure, dans le cadre de l'invention, le dépôt d'un traitement de surface de type antisalissure ou antibrouillard puisque le dépôt de ces couches se fait souvent lors de la même étape que le dépôt de l'empilement antireflets.

Ainsi, il est possible d'éviter d'avoir plusieurs dispositifs de marquage différents, grâce à la modularité de l'atténuateur.

Le dispositif, et par exemple le bloc optique, comporte une sonde configurée pour calibrer l'atténuateur d'énergie et disposée entre l'atténuateur d'énergie et la lentille ophtalmique à marquer, voire de préférence entre la lentille F-thêta et la lentille à marquer.

Le dispositif est de préférence configuré pour pouvoir calibrer l'atténuateur en déterminant une courbe représentant une énergie par impulsion du faisceau focalisé, en fonction d'un angle d'orientation d'un filtre polarisé que comporte l'atténuateur, par rapport à un axe de polarisation du faisceau laser par exemple, pour une énergie par impulsion donnée en entrée de l'atténuateur.

La calibration est par exemple réalisée lors d'un réglage initial de l'atténuateur et/ou de la source laser, et/ou au cours d'une opération de maintenance.

Ainsi, selon une table d'ablation, une énergie par impulsion du faisceau focalisé, correspondant à une fluence nécessaire sur la surface de la lentille, est déterminée, ce qui permet de régler le mode de fonctionnement de l'atténuateur, et la calibration est réalisée grâce à l'au moins une sonde disposée entre l'atténuateur et la lentille ophtalmique à marquer, voire de préférence disposée entre la lentille F-thêta et la lentille à marquer.

Ceci permet par exemple de définir une énergie par impulsion du faisceau focalisé en fonction des matériaux de la lentille à graver, et maintenir cette valeur dans le temps indépendamment d'un vieillissement de la source et des différents composants optiques qui peuvent réduire l'énergie. Ainsi, pour pallier le vieillissement du bloc optique ou de la source laser, lors d'une calibration de maintenance, il est aisé de procéder à une réévaluation d'une énergie effective incidente sur la surface de la lentille pour les modes de fonctionnement de l'atténuateur, et de réassigner les modes de fonctionnement aux matériaux de la lentille à graver en fonction de cette réévaluation.

Selon l'invention, le dispositif comprend un système afocal, ce qui est particulièrement commode pour réduire un encombrement du dispositif.

Le système afocal est conformément à l'invention disposé entre la source laser et avant l'atténuateur, par exemple entre le multiplicateur et l'atténuateur.

Le système afocal est configuré pour élargir un diamètre du faisceau laser. Par exemple, le système afocal est configuré pour tripler le diamètre du faisceau laser. Le système afocal peut être à structure fixe ou à structure variable permettant de faire varier le diamètre du faisceau laser.

Le dispositif est en outre par exemple configuré pour déterminer un ratio entre une largeur de faisceau en sortie du système afocal et la longueur de focalisation de la lentille F-thêta de sorte à avoir un diamètre de faisceau focalisé sur la surface de la lentille ophtalmique voulu, par exemple de l'ordre d'environ 20 µm à 50 µm.

Selon un exemple de réalisation, le bloc optique comporte en outre une tête de scanner configurée pour piloter une orientation du faisceau de rayonnement laser ultraviolet vers la lentille F-thêta, et piloter une position du faisceau laser focalisé dans le plan de focalisation de la lentille F-thêta.

Les points à marquer sont définis et la tête de scanner se synchronise avec la fréquence d'impulsions laser pour illuminer/viser successivement tous les points prédéterminés, une ou plusieurs fois. La tête de scanner permet d'orienter le faisceau pour positionner le point à graver. Ici, la tête de scanner comprend des miroirs, mais l'orientation du faisceau pourrait être réalisée par d'autres moyens, comme par exemple un champ magnétique.

Le dispositif est aussi de préférence configuré pour recevoir au moins une caractéristique géométrique de la lentille ophtalmique et déterminer une altitude du support de la lentille en fonction de l'au moins une caractéristique géométrique de la lentille ophtalmique et de la longueur de focalisation d'une lentille F-thêta.

En effet, d'un marquage à l'autre, la lentille est déplacée en altitude, c'est-à-dire selon z, afin que pour chaque marquage à effectuer, la surface à graver de la lentille soit sensiblement dans le plan de focalisation. Mais pour réaliser un seul marquage, c'est une tête de scanner qui permet d'orienter le faisceau pour réaliser les différents points et déplacer faisceau focalisé dans le plan de focalisation, ou du moins sur la surface de la lentille ophtalmique à marquer.

L'au moins une caractéristique géométrique est par exemple représentative d'une courbure de la surface de la lentille ophtalmique à marquer et d'une épaisseur au centre de la lentille. L'au moins une caractéristique géométrique représentative de la courbure de la surface de la lentille ophtalmique à marquer et de l'épaisseur au centre de la lentille est préalablement déterminée par modélisation/calcul et stockée dans un fichier de surface ou est mesurée par palpage optique ou mécanique.

A cet effet, le dispositif comporte optionnellement un palpeur optique ou mécanique configuré pour mesurer cette caractéristique géométrique.

Optionnellement, la fluence est ajustée en jouant sur la largeur du faisceau. Par exemple, la fluence est maximale avec une section, c'est-à-dire une largeur de faisceau focalisé sur la surface de la lentille ophtalmique à marquer, minimale. Un contrôle de la focalisation sur la surface de la lentille ophtalmique à marquer est réalisé en modifiant l'altitude moyenne de la lentille ophtalmique, c'est-à-dire la position du support verticalement. La longueur de focalisation de la lentille F-thêta, quant à elle, est fixe puisqu'il s'agit une propriété géométrique intrinsèque de la lentille F-thêta.

A cet effet, le dispositif comporte par exemple un mécanisme d'adaptation d'une distance entre le bloc optique et un support de la lentille ophtalmique à marquer, lequel mécanisme d'adaptation est configuré pour modifier une altitude de la lentille ophtalmique à marquer.

Selon un exemple de mise en oeuvre, au moins une des gravures définit un marquage formé par plusieurs points ménagés à distance les uns des autres d'un écartement entre deux points consécutifs prédéterminé. En effet, un marquage peut n'être formé que d'un seul point, mais s'il comporte au moins deux points, deux points consécutifs sont alors distants l'un de l'autre d'un écartement déterminé.

L'écartement est par exemple déterminé par un test de visibilité rendue, et par détermination d'un écartement maximal possible. Il est généralement fixé entre environ 50 µm et 150 µm, et de préférence autour de 50 µm.

Selon un exemple de mise en oeuvre, au moins une des gravures définit un marquage technique sur une surface de la lentille ophtalmique, laquelle lentille ophtalmique présente une prescription prédéterminée.

Selon encore un autre exemple de mise en oeuvre, au moins une des gravures définit un marquage commercial sur une surface de la lentille ophtalmique, laquelle lentille ophtalmique présente une prescription prédéterminée et éventuellement un traitement fonctionnel.

Une vérification du marquage est enfin optionnellement réalisée et, en fonction du résultat de cette vérification, une correction est apportée au marquage. La vérification du marquage comprend par exemple une évaluation de la visibilité.

A cet effet, le dispositif est configuré pour réaliser une vérification des marquages. Et en fonction du résultat de cette vérification, le dispositif est en outre configuré pour corriger ce ou ces marquages.

Conformément à la présente invention, est également proposé un procédé de marquage d'une lentille ophtalmique réalisée en au moins un matériau prédéterminé selon la revendication 14, le procédé étant mis en oeuvre par un dispositif tel que défini précédemment, et le procédé comportant une étape de marquage laser de gravures permanentes sur la lentille ophtalmique, laquelle étape de marquage comporte une étape d'émission d'un faisceau focalisé de rayonnement laser ultraviolet par impulsions présentant au moins les paramètres suivants :
- une longueur d'onde de rayonnement comprise entre 200 nm et 300 nm,
- une durée d'impulsion comprise entre environ 0,1 ns et environ 5 ns, et
- une énergie par impulsion comprise entre environ 5 µJ et environ 100 µJ.

Le procédé selon l'invention faisant partie de la catégorie des procédés par ablation de matière, il permet ainsi de limiter les problèmes liés aux déformations de matière.

Le procédé permet de réaliser des marquages sur un grand nombre de matériaux pouvant constituer la lentille ophtalmique et d'avoir à la fois un marquage précis et une faible zone de matériau affectée thermiquement.

De plus, le marquage de la lentille ophtalmique peut ainsi être indifféremment réalisé avant ou après polissage de la lentille, voire après vernissage le cas échéant, sans que cela n'affecte la qualité du marquage ou que le marquage n'affecte la qualité du polissage ou du vernissage appliqués à la lentille.

Par exemple, la au moins une gravure est réalisée sur une surface de la lentille ophtalmique, laquelle lentille ophtalmique présente une prescription prédéterminée et ladite surface est dépourvue de traitement fonctionnel.

Autrement dit, la lentille ophtalmique ayant une prescription prédéterminée comporte un substrat, avec ou sans traitements fonctionnels, et au moins une des gravures est gravée directement sur une surface du substrat.

On entend en outre par prescription que celle-ci peut être nulle.

Bien entendu, un tel procédé est utilisable plus en amont au cours de la fabrication d'une lentille, comme par exemple sur une lentille ophtalmique en cours d'usinage d'au moins une face ne présentant pas encore de prescription prédéterminée.

De plus, la au moins une gravure est par exemple réalisée sur la surface de la lentille ophtalmique, laquelle lentille ophtalmique présente une prescription prédéterminée et est pourvue d'au moins un traitement fonctionnel.

Le procédé présente en outre tout ou partie des étapes correspondant aux configurations du dispositif présentées précédemment, engendrant des avantages analogues.

D'autres caractéristiques et avantages de la présente invention ressortiront mieux à la lecture de la description donnée en référence aux dessins annexés, donnés à titre indicatif et nullement limitatif, dans lesquels :
- la figure 1 illustre le séquencement de différentes étapes d'un procédé de fabrication d'une lentille,
- la figure 2 représente schématiquement un dispositif de marquage selon un exemple de réalisation de l'invention,
- la figure 3 représente un schéma bloc d'un procédé de marquage selon un mode de réalisation de la présente invention, et
- la figure 4 représente différentes étapes de fonctionnement du procédé de marquage illustré sur la figure 3.

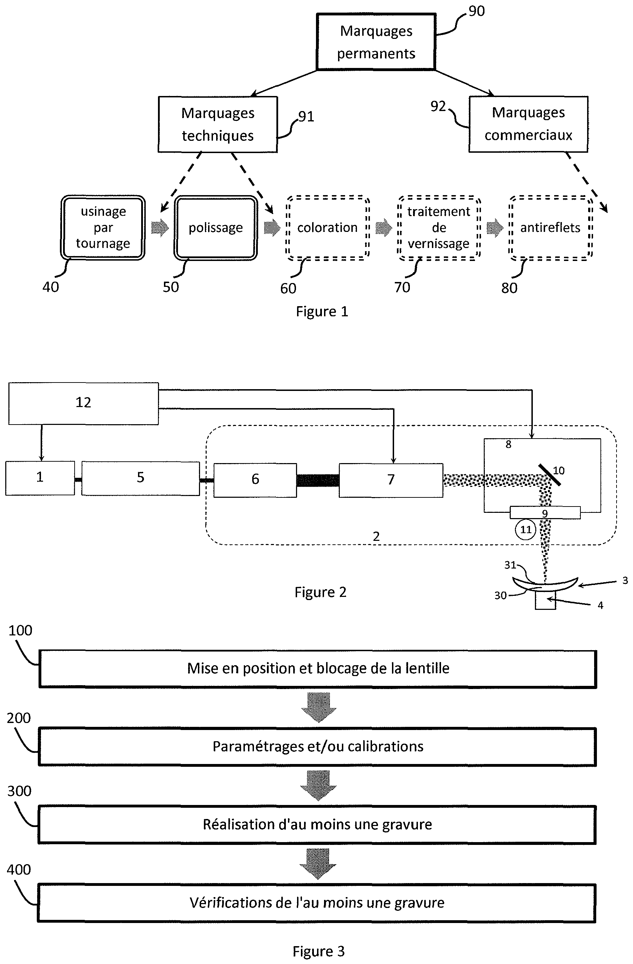

La figure 1 schématise les principales étapes de réalisation d'une lentille ophtalmique.

Un substrat est d'abord réalisé selon une prescription préétablie, en étant par exemple usiné par tournage à l'étape 40.

On appelle ici substrat un corps de la lentille ophtalmique. Il comporte traditionnellement un bord et deux surfaces qui sont séparées l'une de l'autre par le bord. Conventionnellement, une face, dite face arrière est souvent concave, alors que l'autre face, dite face avant est souvent convexe, mais l'inverse est possible.

Après usinage, les faces de la lentille sont polies à l'étape 50.

Puis la lentille reçoit optionnellement un ou plusieurs traitements dits fonctionnels sur au moins une de ses faces, souvent sur la face arrière, comme par exemple une coloration à l'étape 60, et/ou un ou plusieurs traitements de vernissage à l'étape 70, et/ou possiblement aussi un traitement de type antireflets à l'étape 80.

Les traitements dits "de vernissage" sont tels que définis plus haut.

Les traitements dits "antireflets" représenté ici sont tels que définis plus haut.

Après polissage, voire après le dernier des traitements fonctionnels précités si la lentille en reçoit, la lentille est finie.

Le bord de la lentille est mis à la forme d'une monture à laquelle elle est destinée soit avant polissage, soit avant traitement fonctionnel mais après polissage, soit généralement après les traitements fonctionnels, lorsque la lentille est finie.

Grâce à un dispositif et un procédé selon l'invention qui seront détaillés ultérieurement, il est possible de réaliser, à l'étape 90, des marquages permanents durant le procédé de fabrication de la lentille.

Il est par exemple aussi bien possible de réaliser des marquages techniques avant ou après le polissage à l'étape 91, avant les traitements fonctionnels, que des marquages commerciaux une fois la lentille finie à l'étape 92, c'est-à-dire, également après polissage si la lentille ne reçoit aucun traitement fonctionnel qu'après la dernière étape de traitement fonctionnel si la lentille en reçoit, comme par exemple sur le vernis si la lentille a subi un vernissage.

On appelle ici marquage le résultat d'une gravure sur une lentille ophtalmique, dite ici lentille ophtalmique à marquer, de façon à former un marquage. Une étape de marquage peut permettre de réaliser plusieurs marquages, par exemple, dans le cadre des marquages techniques, il y a à minima deux marquages positionnés à 34 mm l'un de l'autre, équidistants par rapport à un point de montage de la lentille, et formant un axe horizontal de la lentille ophtalmique.

Chaque marquage est formé d'au moins un point ou « spot ». Si un marquage comprend au moins deux points, c'est-à-dire plusieurs points, deux points consécutifs sont distants l'un de l'autre d'une distance, d'un écartement, prédéterminée.

Chaque point, quant à lui, est réalisé par au moins une impulsion de rayonnement laser à un endroit précis ou par plusieurs impulsions, c'est-à-dire au moins deux impulsions.

La figure 2 présente schématiquement un dispositif selon un mode de réalisation de la présente invention, permettant notamment de mettre en oeuvre l'étape de marquage 90 du procédé décrit ci-dessus.

Le dispositif comporte principalement une source laser 1 et un bloc optique 2.

La source laser 1 émet un faisceau de rayonnement infrarouge par impulsion.

Le bloc optique 2 permet quant à lui de focaliser le faisceau de rayonnement laser de sorte à pouvoir réaliser la gravure voulue sur une surface 31 d'une lentille ophtalmique 3, réalisée en au moins un matériau prédéterminé, laquelle lentille 3 est positionnée sur un support 4.

Traditionnellement, c'est donc la dernière couche qui est gravée, par exemple notamment le substrat ou le vernis selon le cas.

En fonction, la lentille est mise en position dans le référentiel du dispositif différemment.

Pour réaliser un marquage, le dispositif est configuré pour émettre un faisceau de rayonnement ultraviolet focalisé et avec avantageusement les paramètres suivants :
- une longueur d'onde de rayonnement comprise entre 200 nm et 300 nm, voire entre environ 230 nm et environ 290 nm, préférentiellement entre environ 208 nm et environ 220 nm, par exemple environ 209 nm ou environ 210 nm ou environ 213 nm, ou alternativement, de façon encore particulière entre environ 260 nm et environ 270 nm, par exemple environ 261,7 nm ou environ 263 nm ou environ 266 nm,
- une durée d'impulsion comprise entre environ 0,1 ns et environ 10 ns, voire de préférence entre environ 0,1 et environ 5 ns voire 2 ns, et
- une énergie par impulsion au point de focalisation comprise entre environ 5 µJ et environ 100 µJ, voire entre environ 10 µJ et environ 80 µJ, voire entre environ 10 µJ et environ 65 µJ, et
- une énergie par impulsion émise par la source est alors comprise entre environ 20 µJ et environ 120 µJ, de préférence entre environ 30 µJ et environ 80 µJ, et de préférence supérieure à 35 µJ, voire supérieure à 40 µJ, voire encore entre environ 40 µJ et environ 60 µJ.

Avantageusement, le dispositif est aussi configuré pour avoir une puissance crête importante, c'est-à-dire entre environ 2.5 kW et environ 1 MW, voire entre environ 20 kW et environ 50 kW, et/ou une fréquence d'impulsions comprise entre environ 100 Hz et environ 10 kHz.

La source laser 1 émet ainsi des impulsions avec une énergie par impulsion déterminée, à une fréquence d'impulsions donnée, pour une longueur d'onde donnée. La durée d'impulsion est généralement fixée par conception de la source laser. Ainsi, la fréquence de pulsation et la durée de chaque pulsation induisent une puissance moyenne faible, tout en ayant une puissance crête élevée.

Dans un exemple particulier, le dispositif est configuré pour émettre un rayonnement ultraviolet et avec avantageusement les paramètres suivants :
- une longueur d'onde de rayonnement d'environ 266 nm,
- une fréquence d'impulsions d'environ 1 kHz,
- une durée d'impulsion d'environ 1 ns, et
- une énergie par impulsion au point de focalisation comprise entre environ 10 µJ et environ 25 µJ selon les matériaux gravés.

Par exemple, la source laser est alors configurée pour émettre des impulsions ayant une énergie par impulsion, avant un atténuateur, comprise entre 40 µJ et 60 µJ.

Par exemple :
- pour une lentille de type Orma® qui est principalement composée d'un polymère de type CR39, un point est généralement marqué par huit impulsions à une énergie par impulsion d'environ 25 µJ sur la surface à marquer ;
- pour un polycarbonate, un point est généralement marqué par une impulsion à une énergie par impulsion d'environ 15 µJ sur la surface à marquer ;
- pour un matériau d'indice de valeur d'environ 1.74, un point est généralement marqué par trois impulsions à une énergie par impulsion d'environ 10 µJ sur la surface à marquer ;
- pour un matériau de type Stylis® présentant généralement un indice de réfraction de 1.67, un point est généralement marqué par une impulsion à une énergie par impulsion d'environ 25 µJ sur la surface à marquer ;
- pour un matériau de type Ormix® d'indice de réfraction généralement égal à environ 1.6, un point est généralement marqué par deux impulsions à une énergie par impulsion d'environ 15 µJ sur la surface à marquer ; et
- pour un marquage sur un vernis de type HMC, en vue d'un marquage visible un point est généralement marqué par dix impulsions à une énergie par impulsion d'environ 25 µJ, et pour un marquage faible pour marquer un revêtement antisalissure et/ou antibrouillard, par une impulsion à une énergie d'environ 10 µJ.

Bien entendu, avec un tel dispositif l'énergie par impulsion pourrait être bien supérieure.

Pour cela, la source laser 1 du dispositif selon l'invention comporte un laser à milieu solide qui émet un faisceau de rayonnement infrarouge par pulsations. Un tel laser a notamment pour avantage d'être peu cher pour des puissances crête élevées, et induit très peu voire pas de contraintes environnementales. En outre, sa maintenance est simple.

On entend par laser à milieu solide un laser dont le milieu d'excitation est défini par opposition aux lasers ayant un milieu d'excitation liquide ou gazeux. C'est à dire que le milieu d'excitation est soit un cristal solide ou ionique soit une fibre optique. En anglais, le terme désignant les lasers solides est "solide-state laser".

Une telle source particulièrement intéressante est par exemple un laser Nd-YAG qui émet un rayonnement principal à une longueur d'onde d'environ 1064 nm.

Pour obtenir un rayonnement ultraviolet à partir d'une source laser à rayonnement infrarouge, le dispositif comporte ici un multiplicateur 5 qui est positionné en sortie de la source laser 1. Le multiplicateur 5 permet de multiplier, généralement par un facteur compris entre trois et dix, la fréquence de rayonnement du rayonnement laser émis par la source laser 1. Le multiplicateur est choisi, en fonction de la longueur d'onde émise par la source laser, de sorte à avoir, en sortie du multiplicateur un rayonnement ultraviolet apte à être absorbé par le matériau et suffisamment énergétique pour détruire les liaisons chimiques du matériau de la lentille tout en utilisant des composants optiques permettant une durée et une fréquence d'impulsions qui conviennent.

Dans le cas d'un laser Nd-YAG émettant un rayonnement dont la fréquence correspond à une longueur d'onde de 1064 nm, il est par exemple alors nécessaire de quadrupler sa fréquence de rayonnement. Plus précisément, en sortie d'un multiplicateur de facteur quatre, le rayonnement aura une fréquence de rayonnement correspondant à une longueur d'onde d'environ 266 nm.

Le multiplicateur 5 est positionné entre la source laser 1 et le bloc optique 2.

En pratique, la source laser 1 et le multiplicateur 5 peuvent par exemple soit être réunis au sein d'un même boitier, soit être deux éléments séparés à juxtaposer sur une ligne optique du dispositif. Le cas échéant, la combinaison de la source laser avec un multiplicateur dans un même boitier donne un système, dit "système laser" par commodité, possiblement très compact.

Le bloc optique 2 comporte un système afocal 6, un atténuateur 7, une tête de scanner 8 et une lentille F-thêta 9.

Le système afocal 6, l'atténuateur 7, la tête de scanner 8 et la lentille F-thêta 9 sont ici globalement montés en série.

Le système afocal 6 est un système optique permettant d'élargir le faisceau de rayonnement qui lui parvient. En l'occurrence, il permet de tripler sa section, son diamètre. Par exemple, le faisceau de rayonnement ultraviolet en sortie du multiplicateur présente un diamètre « d ». Il entre dans le bloc optique 2 par le système afocal 6. En sortie du système afocal 6 il présente dès lors un diamètre « 3 x d », c'est-à-dire un diamètre triplé. Le système afocal pourrait aussi avoir un facteur d'élargissement différent, par exemple compris entre deux et dix.

Ici, le système afocal 6 est fixe, c'est-à-dire que pour un faisceau de diamètre donné, il lui sera toujours appliqué le même facteur d'élargissement. Ceci est dû à la constitution du système afocal 6. Il existe cependant des systèmes afocaux dont le facteur d'élargissement est ajustable, variable. Un des avantages lié au fait d'avoir un système afocal fixe, est d'avoir une structure plus simple et moins chère.

En sortie du système afocal 6, le rayonnement ultraviolet entre dans l'atténuateur 7.

L'atténuateur 7 permet principalement de régler une fluence. La fluence est exprimée en J/cm² par exemple. C'est la quantité d'énergie (en J) incidente par impulsion sur la surface de la lentille ophtalmique à marquer par unité de surface (en cm² par exemple).

L'atténuateur 7 a ici la particularité d'être modulable.

Autrement dit, l'atténuateur 7 a ici plusieurs mode de fonctionnement, il est configuré pour avoir plusieurs niveaux d'atténuation. La variation est par exemple soit continue soit par incrément. Il est ainsi possible d'ajuster l'énergie du faisceau en fonction du matériau de la lentille à marquer.

Le bloc optique 2 présente ainsi un chemin optique (hors multiplicateurs de fréquence 5) c'est-à-dire entre le système afocal 6 et la lentille F-thêta 9, qui a un taux de transmission d'énergie d'environ 80 % à 90 %, et qui peut diminuer lors du vieillissement du bloc optique. Or pour graver, par ablation, des matériaux très différents, et surtout pour pouvoir produire une même fluence sur la surface de la lentille pour un diamètre donné de faisceau focalisé sur la surface de la lentille en dépit d'un vieillissement de la source ou du chemin optique, il est nécessaire de pouvoir contrôler la fluence au cours du temps. Pour cela, soit la source laser est reconfigurée pour émettre un faisceau de rayonnement à un autre niveau d'énergie, soit il est alors judicieux d'avoir un atténuateur modulable, au sens ajustable, monté en série en sortie de la source laser de sorte à pouvoir moduler l'énergie du rayonnement émis par la source laser. Ici, la source laser 1 est de préférence à énergie fixe, ce qui rend le dispositif plus économique. Il est alors préférable d'avoir un atténuateur 7 modulable en contrepartie.

La fluence est déterminée de sorte à être suffisante pour parvenir à un mécanisme de marquage par ablation en fonction d'au moins un paramètre prédéterminé du matériau de la lentille ophtalmique. Le paramètre du matériau à partir duquel la fluence est déterminée est par exemple choisi parmi un paramètre de dégradation et une absorbance à la longueur d'onde de marquage. A cet effet par exemple, une table de performance peut être réalisée par étalonnage du dispositif par rapport à différents matériaux couramment utilisés, par exemple en réalisant quelques gravures sur des substrats tests et en mesurant une fluence correspondante par rapport à une visibilité rendue, aussi bien à l'oeil nu qu'à travers des systèmes de vision tels qu'une caméra ou un microscope, ou encore des machines d'alignement/contrôle.

La table de performance permet par exemple d'apparier un mode de fonctionnement de l'atténuateur avec un type de matériau à graver ou d'apparier une énergie au point de focalisation avec un matériau à graver.

Apparier une énergie au point de focalisation avec un matériau à graver est une option plus intéressante car il n'est pas nécessaire de refaire la table de performance pour chaque matériau lorsque le système vieillit ; il suffit de refaire une calibration énergie-mode de fonctionnement de l'atténuateur qui est plus aisée. Cependant, cette option nécessite de pouvoir mesurer l'énergie au point de focalisation par impulsion.

Selon une alternative intéressante, la table de performance peut aussi être réalisée par mesure d'une visibilité d'un marquage sur ledit matériau pour une énergie d'impulsion et/ou un mode de fonctionnement de l'atténuateur donné et la mesure d'une déformation induite par le marquage.

Ainsi, pour connaitre la valeur à appliquer, il est possible de se baser sur des abaques, des tables de valeurs, indiquant la fluence nécessaire pour un matériau donné et de connaître les fluences permises par les différents modes de fonctionnement. En fonction, le mode de fonctionnement de l'atténuateur 7 est réglé.

Dans le cas d'un atténuateur 7 modulable, le dispositif, et ici le bloc optique 2 en particulier, comporte une sonde 11.

La sonde 11 est disposée entre l'atténuateur 7 et la lentille ophtalmique à marquer 3, et ici entre la lentille F-thêta 9 et la lentille à marquer 3. La sonde 11 est notamment configurée pour calibrer l'atténuateur 7, et/ou pour calibrer un système comprenant la source laser 1 et l'atténuateur 7, en mesurant l'énergie par impulsion en sortie de la lentille F-thêta, sensiblement identique à l'énergie au point de focalisation, en fonction de l'énergie par impulsion issue de la source laser 1 et d'un mode de fonctionnement de l'atténuateur 7.

En sortie de l'atténuateur 7, le faisceau traverse la tête de scanner 8. La tête de scanner 8 permet de piloter une orientation du faisceau laser en direction de la lentille F-thêta 9, et une position du faisceau laser focalisé dans un plan de focalisation de la lentille F-thêta 9. Les points à marquer sont définis et la tête de scanner se synchronise avec la fréquence d'impulsions laser pour illuminer/viser successivement des points géographiques prédéterminés correspondant aux points à marquer.

Pour cela, la tête de scanner 8 comprend ici des miroirs 10 pour orienter le faisceau, mais l'orientation du faisceau pourrait être réalisée par d'autres moyens, comme par exemple un champ magnétique.

En sortie de la tête de scanner 8, le faisceau traverse ici la lentille F-thêta 9.

Une lentille F-thêta est une lentille à champ plat formant un plan de focalisation. Elle permet ainsi de focaliser le faisceau dans le plan de focalisation avec un diamètre de faisceau déterminé dans le plan de focalisation, ce qui permet de réaliser les points avec un diamètre voulu.

La lentille F-thêta 9 est ici localisée en sortie du bloc optique 2. Et en l'occurrence, elle est située juste au-dessus de la lentille ophtalmique à marquer 3.

Dans le présent exemple de réalisation, la lentille F-thêta 9 présente une longueur de focalisation d'environ 160 mm.

Le bloc optique 2 est ainsi configuré pour focaliser le faisceau de rayonnement laser ultraviolet sur la surface de la lentille 3 par exemple avec un diamètre de faisceau focalisé sur la surface de la lentille ophtalmique 3 positionnée dans la plan de focalisation de la lentille F-thêta de l'ordre d'environ 20 µm à environ 50 µm. Ceci permet par exemple d'obtenir un point marqué d'un diamètre d'environ 15 à environ 30 µm.

Ainsi, pour la réalisation d'un marquage, les différents points, si plusieurs points sont nécessaires, sont réalisés en modifiant l'orientation du faisceau grâce à la tête de scanner 8.

Si différents marquages sont à réaliser, c'est la position de la lentille à marquer 3 qui est alors modifiée.

Pour cela, le dispositif comporte en outre par exemple un mécanisme d'adaptation de la distance entre le bloc optique 2 et le support 4 de la lentille ophtalmique à marquer 3 (non représenté), afin de pouvoir modifier l'altitude de la lentille 3 au cours du procédé de marquage, si celui-ci comporte la réalisation de plusieurs marquages.

Le dispositif comporte enfin de préférence un ordinateur et un contrôleur, formant une unité de contrôle et de commande 12.

L'unité de contrôle et de commande 12 comporte des éléments systémiques configurés pour exécuter un programme d'ordinateur pour mettre en oeuvre chacune des étapes d'un procédé de marquage comportant des paramètres de fonctionnement prédéterminés pour émettre les impulsions de rayonnement laser ultraviolet avec les paramètres énoncés précédemment, à savoir :
- une longueur d'onde de rayonnement comprise entre 200 nm et 300 nm après multiplication formant un faisceau de rayonnement ultraviolet,
- une fréquence d'impulsions est comprise entre environ 100 Hz et environ 10 kHz,
- une durée d'impulsion comprise entre environ 0,1 ns et environ 5 ns,
- une énergie par impulsion comprise entre 5 µJ et environ 100 µJ,
- une puissance crête comprise entre environ 2,5 kW et environ 1 MW.

Ainsi, le dispositif présenté précédemment permet de mettre en oeuvre les différentes étapes du procédé suivant.

Comme l'illustre la figure 3, le marquage d'une lentille ophtalmique (étapes 90 à 92), telle que la lentille ophtalmique 3 comporte par exemple les étapes suivantes :
- une étape 100 de mise en position et blocage de la lentille ;
- une étape 200 de paramétrages et/ou de calibrations ;
- au moins une étape 300 de réalisation d'au moins une gravure ;
- au moins une étape 400 de vérification de l'au moins une gravure.

Si plusieurs gravures sont nécessaires, la position de la lentille est ajustée, et la gravure suivante est réalisée. Les étapes de paramétrage et de calibration deviennent alors optionnelles.

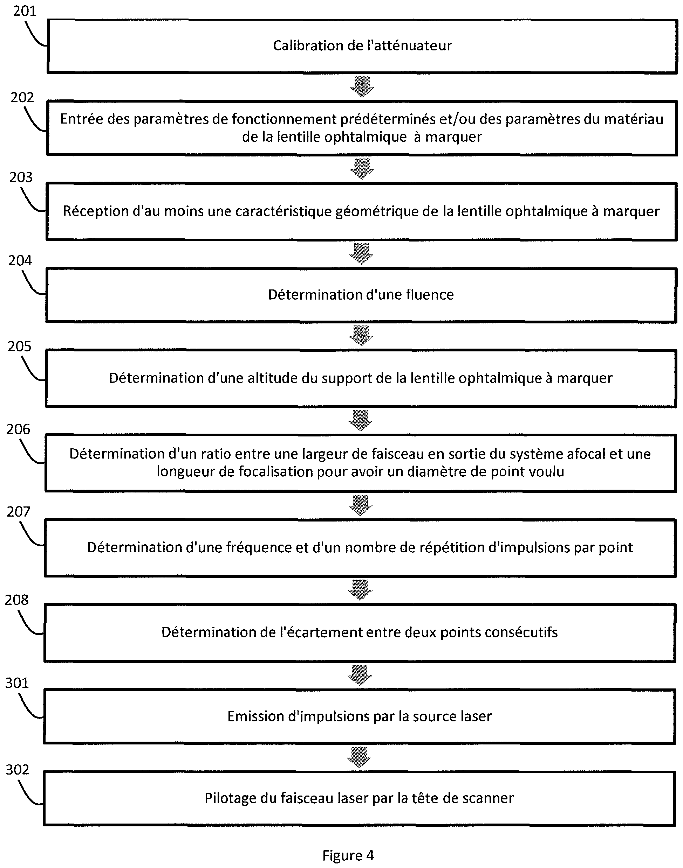

La figure 4 présente des étapes de fonctionnement du procédé illustré sur la figure 3.

Selon cet exemple, le dispositif est configuré pour :
- à l'étape 201, calibrer l'atténuateur 7 au moins à l'aide de la sonde 11,
- à l'étape 202, recevoir des paramètres de fonctionnement prédéterminés et/ou des paramètres du matériau de la lentille ophtalmique à marquer 3,
- à l'étape 203, recevoir au moins une caractéristique géométrique de la lentille ophtalmique à marquer 3,
- à l'étape 204, déterminer une fluence,
- à l'étape 205, déterminer une altitude du support de la lentille ophtalmique à marquer 3,
- à l'étape 206, déterminer un ratio entre une largeur de faisceau en sortie du système afocal 6 et une longueur de focalisation de la lentille F-thêta 9 pour avoir un diamètre de point voulu,
- à l'étape 207, déterminer une fréquence d'impulsions et un nombre de répétition d'impulsions par point,
- à l'étape 208, déterminer un écartement entre deux points consécutifs,
- à l'étape 301, émettre des impulsions par la source laser 1,
- à l'étape 302, piloter le faisceau laser par la tête de scanner 8.

## Revendications

1. Dispositif de marquage de lentille ophtalmique (3), ladite lentille ophtalmique (3) étant réalisée en au moins un matériau prédéterminé, comportant un laser (1) configuré pour réaliser des gravures permanentes sur la lentille ophtalmique (3), le dispositif étant **caractérisé en ce que** le laser (1) est configuré pour émettre un faisceau focalisé de rayonnement laser ultraviolet par impulsions, le faisceau focalisé comportant au moins les paramètres suivants :
- une longueur d'onde de rayonnement comprise entre 200 nm et 300 nm,
- une durée d'impulsion comprise entre environ 0,1 ns et environ 5 ns, et
- une énergie par impulsion comprise entre environ 5 µJ et environ 100 µJ,
**en ce que** le dispositif comporte un bloc optique (2) qui comporte un atténuateur d'énergie (7) configuré pour régler une fluence du faisceau de rayonnement ultraviolet focalisé sur une surface de la lentille ophtalmique (3) à marquer selon plusieurs modes de fonctionnement de l'atténuateur (7), lesquels modes définissent chacun une valeur de fluence déterminée, **en ce que** le bloc optique (2) est en plus pourvu d'une lentille F-Thêta (9), localisée en sortie du bloc optique (2) et configurée pour focaliser un faisceau de rayonnement laser ultraviolet dans un plan de focalisation de la lentille F-thêta (9) avec un diamètre de faisceau focalisé dans le plan de focalisation de l'ordre d'environ 20 µm à environ 50 µm,
et **en ce qu'**il comporte en outre un système afocal (6) disposé entre la source laser (1) et l'atténuateur (7).

2. Dispositif selon la revendication 1, **caractérisé en ce que** le faisceau focalisé comporte en outre au moins un des paramètres suivants :
- une puissance crête comprise entre environ 2,5 kW et environ 1 MW, et/ou
- une fréquence d'impulsions comprise entre environ 100 Hz et environ 10 kHz.

3. Dispositif selon l'une quelconque des revendications 1 ou 2, **caractérisé en ce que** la longueur d'onde de rayonnement du faisceau laser ultraviolet focalisé est comprise entre environ 230 nm et environ 290 nm, préférentiellement environ 266 nm.

4. Dispositif selon l'une quelconque des revendications 1 à 3, **caractérisé en ce qu'**il comporte une source laser (1) à milieu solide configurée pour émettre un faisceau de rayonnement infrarouge par impulsions, et un multiplicateur (5), positionné en sortie de la source laser (1) et avant le système afocal (6), configuré pour multiplier une fréquence de rayonnement du faisceau infrarouge émis en sortie de la source laser (1), préférentiellement par un facteur compris entre trois et dix.

5. Dispositif selon la revendication 4, **caractérisé en ce que** la source laser (1) est un laser Nd-YAG et **en ce que** le multiplicateur (5) est configuré pour quadrupler la fréquence d'impulsions en sortie du laser ND-YAG.

6. Dispositif selon l'une quelconque des revendications 4 ou 5, **caractérisé en ce que** la source laser est configurée pour émettre un faisceau laser de rayonnement par impulsions ayant une énergie par impulsion comprise entre environ 30 µJ et environ 80 µJ, préférentiellement supérieure à 40 µJ.

7. Dispositif selon l'une quelconque des revendications 1 à 6, **caractérisé en ce que** les modes de fonctionnement de l'atténuateur (7) et/ou les valeurs de fluence déterminées pour lesdits modes de fonctionnement sont définis à partir d'au moins un paramètre du matériau de la lentille ophtalmique (3) choisi parmi un paramètre de dégradation et une absorbance à la longueur d'onde du rayonnement ultraviolet.

8. Dispositif selon l'une quelconque des revendications 1 à 7, **caractérisé en ce qu'**il est configuré pour pouvoir calibrer l'atténuateur (7) en déterminant une courbe représentant une énergie par impulsion du faisceau focalisé, en fonction d'un angle d'orientation d'un filtre polarisé que comporte l'atténuateur (7), pour une énergie par impulsion donnée en entrée de l'atténuateur (7).

9. Dispositif selon l'une quelconque des revendications 1 à 8, **caractérisé en ce que** le bloc optique (2) comporte en outre une tête de scanner (8) configurée pour piloter une orientation du faisceau de rayonnement laser ultraviolet vers la lentille F-Thêta (9), et piloter une position du faisceau laser focalisé dans le plan de focalisation de la lentille F-Thêta (9).

10. Dispositif selon l'une quelconque des revendications 1 à 9, **caractérisé en ce qu'**il comporte en outre par exemple un mécanisme d'adaptation d'une distance entre le bloc optique (2) et et-un support (4) de la lentille ophtalmique (3) à marquer, lequel mécanisme d'adaptation est configuré pour modifier une altitude de la lentille ophtalmique (3) à marquer.

11. Dispositif selon l'une quelconque des revendications 1 à 10, **caractérisé en ce qu'**en utilisation, au moins une des gravures définit un marquage formé par plusieurs points ménagés à distance les uns des autres d'un écartement entre deux points consécutifs prédéterminé.

12. Dispositif selon l'une quelconque des revendications 1 à 11, **caractérisé en ce qu'**en utilisation au moins une des gravures définit un marquage technique sur une surface de la lentille ophtalmique (3), laquelle lentille ophtalmique (3) présente une prescription prédéterminée.

13. Dispositif selon l'une quelconque des revendications 1 à 12, **caractérisé en ce qu'**en utilisation au moins une des gravures définit un marquage commercial sur une surface de la lentille ophtalmique (3), laquelle lentille ophtalmique (3) présente une prescription prédéterminée et éventuellement un traitement fonctionnel.

14. Procédé de marquage d'une lentille ophtalmique (3) réalisée en au moins un matériau prédéterminé, le procédé étant mis en oeuvre par un dispositif selon l'une quelconque des revendications 1 à 13, et le procédé comportant une étape de marquage laser de gravures permanentes sur la lentille ophtalmique (3) laquelle étape de marquage comporte une étape d'émission d'un faisceau focalisé de rayonnement laser ultraviolet par impulsions présentant au moins les paramètres suivants :
- une longueur d'onde de rayonnement comprise entre 200 nm et 300 nm,
- une durée d'impulsion comprise entre environ 0,1 ns et environ 5 ns, et
- une énergie par impulsion comprise entre environ 5 µJ et environ 100 µJ.

15. Procédé selon la revendication 14, **caractérisé en ce que** la au moins une gravure est réalisée sur une surface de la lentille ophtalmique (3), laquelle lentille ophtalmique (3) présente une prescription prédéterminée et ladite surface est dépourvue de traitement fonctionnel.

16. Procédé selon l'une quelconque des revendications 14 ou 15, **caractérisé en ce que** la au moins une gravure est réalisée sur une surface de la lentille ophtalmique (3), laquelle lentille ophtalmique (3) présente une prescription prédéterminée et est pourvue d'au moins un traitement fonctionnel.

## Patentansprüche

1. Vorrichtung zur Markierung einer ophthalmischen Linse (3), wobei die ophthalmische Linse (3) aus mindestens einem vorherbestimmten Material hergestellt ist, umfassend einen Laser (1), der ausgelegt ist, permanente Gravuren auf der ophthalmischen Linse (3) vorzunehmen,
wobei die Vorrichtung **dadurch gekennzeichnet ist, dass** der Laser (1) ausgelegt ist, einen fokussierten Strahl einer Ultraviolett-Laserstrahlung durch Pulse zu emittieren, wobei der fokussierte Strahl mindestens die folgenden Parameter umfasst:
- eine Strahlungswellenlänge zwischen 200 nm und 300 nm,
- eine Pulsdauer zwischen ungefähr 0,1 ns und ungefähr 5 ns, und
- eine Energie pro Puls zwischen ungefähr 5 µJ und ungefähr 100 µJ,
und dadurch, dass die Vorrichtung einen optischen Block (2) umfasst, welcher einen Energiedämpfer (7) umfasst, der ausgelegt ist, eine Fluenz des Strahls der Ultraviolettstrahlung, der auf eine zu markierende Fläche der ophthalmischen Linse (3) fokussiert ist, gemäß mehreren Betriebsmodi des Dämpfers (7) zu regeln, wobei die Modi jeweils einen bestimmten Fluenzwert definieren,
dadurch, dass der optische Block (2) außerdem mit einer F-Theta-Linse (9) versehen ist, die am Ausgang des optischen Blocks (2) angeordnet und ausgelegt ist, einen Strahl der Ultraviolett-Laserstrahlung in einer Fokussierungsebene der F-Theta-Linse (9) zu fokussieren, wobei ein Durchmesser des fokussierten Strahls in der Fokussierungsebene in der Größenordnung von ungefähr 20 µm bis ungefähr 50 µm liegt,
und dadurch, dass diese außerdem ein afokales System (6) umfasst, das zwischen der Laserquelle (1) und dem Dämpfer (7) angeordnet ist.

2. Vorrichtung nach Anspruch 1, **dadurch gekennzeichnet, dass** der fokussierte Strahl außerdem mindestens einen der folgenden Parameter umfasst:
- eine Spitzenleistung zwischen ungefähr 2,5 kW und ungefähr 1 MW, und/oder
- eine Pulsfrequenz zwischen ungefähr 100 Hz und ungefähr 10 kHz.

3. Vorrichtung nach einem der Ansprüche 1 oder 2, **dadurch gekennzeichnet, dass** die Wellenlänge des fokussierten Strahls der Ultraviolett-Laserstrahlung zwischen ungefähr 230 nm und ungefähr 290 nm, bevorzugt ungefähr 266 nm, beträgt.

4. Vorrichtung nach einem der Ansprüche 1 bis 3, **dadurch gekennzeichnet, dass** diese eine Festkörper-Laserquelle (1), die ausgelegt ist, einen Strahl einer Infrarotstrahlung durch Pulse zu emittieren, und einen Vervielfacher (5), der am Ausgang der Laserquelle (1) und vor dem afokalen System (6) positioniert und ausgelegt ist, eine Strahlungsfrequenz des Infrarot-Strahls, die am Ausgang der Laserquelle (1) emittiert wird, vorzugsweise um einen Faktor zwischen drei und zehn zu vervielfachen, umfasst.

5. Vorrichtung nach Anspruch 4, **dadurch gekennzeichnet, dass** die Laserquelle (1) ein Nd-YAG-Laser ist, und dadurch, dass der Vervielfacher (5) ausgelegt ist, die Pulsfrequenz am Ausgang des ND-YAG-Lasers zu vervierfachen.

6. Vorrichtung nach einem der Ansprüche 4 oder 5, **dadurch gekennzeichnet, dass** die Laserquelle ausgelegt ist, einen Strahl einer Laserstrahlung durch Pulse mit einer Pulsenergie zwischen ungefähr 30 µJ und ungefähr 80 µJ, vorzugsweise von mehr als 40 µJ, zu emittieren.

7. Vorrichtung nach einem der Ansprüche 1 bis 6, **dadurch gekennzeichnet, dass** die Betriebsweise des Dämpfers (7) und/oder die Fluenzwerte, die für die Betriebsweisen definiert werden, aus mindestens einem Parameter des Materials der ophthalmischen Linse (3) bestimmt werden, der aus einem Abbau- und einem Absorptionsparameter bei der Wellenlänge der Ultraviolettstrahlung ausgewählt ist.

8. Vorrichtung nach einem der Ansprüche 1 bis 7, **dadurch gekennzeichnet, dass** diese ausgelegt ist, den Dämpfer (7) kalibrieren zu können, indem eine Kurve, die eine Pulsenergie des fokussierten Strahls als Funktion eines Orientierungswinkels eines Polarisationsfilters repräsentiert, das der Dämpfer (7) umfasst, für eine Pulsenergie, die am Eingang des Dämpfers (7) gegeben ist, bestimmt wird.

9. Vorrichtung nach einem der Ansprüche 1 bis 8, **dadurch gekennzeichnet, dass** der optische Block (2) außerdem einen Scannerkopf (8) umfasst, der ausgelegt ist, eine Orientierung des Strahls der Ultraviolett-Laserstrahlung zur F-Theta-Linse (9) zu steuern, und eine Position des fokussierten Laserstrahls in der Fokussierungsebene der F-Theta-Linse (9) zu steuern.

10. Vorrichtung nach einem der Ansprüche 1 bis 9, **dadurch gekennzeichnet, dass** diese außerdem beispielsweise einen Anpassungsmechanismus einer Distanz zwischen dem optischen Block (2) und einem Träger (4) der zu markierenden ophthalmischen Linse (3) umfasst, wobei der Anpassungsmechanismus ausgelegt ist, eine Höhe der zu markierenden ophthalmischen Linse (3) zu modifizieren.

11. Vorrichtung nach einem der Ansprüche 1 bis 10, **dadurch gekennzeichnet, dass** im Gebrauch mindestens eine der Gravuren eine Markierung definiert, welche durch mehrere Punkte gebildet wird, die in einer Distanz voneinander mit einem vorherbestimmten Abstand zwischen zwei aufeinanderfolgenden Punkten angeordnet sind.

12. Vorrichtung nach einem der Ansprüche 1 bis 11, **dadurch gekennzeichnet, dass** im Gebrauch mindestens eine der Gravuren eine technische Markierung auf einer Fläche der ophthalmischen Linse (3) definiert, wobei die ophthalmische Linse (3) eine vorherbestimmte Verschreibung aufweist.

13. Vorrichtung nach einem der Ansprüche 1 bis 12, **dadurch gekennzeichnet, dass** im Gebrauch mindestens eine der Gravuren eine kommerzielle Markierung auf einer Fläche der ophthalmischen Linse (3) definiert, wobei die ophthalmische Linse (3) eine vorherbestimmte Verschreibung und gegebenenfalls eine funktionelle Behandlung aufweist.

14. Verfahren zur Markierung einer ophthalmischen Linse (3), die aus mindestens einem vorherbestimmten Material hergestellt ist, wobei das Verfahren durch eine Vorrichtung nach einem der Ansprüche 1 bis 13 durchgeführt wird, umfassend einen Schritt der Lasermarkierung permanenter Gravuren auf der ophthalmischen Linse (3), wobei der Markierungsschritt einen Schritt der Emission eines fokussierten Strahls einer Ultraviolett-Laserstrahlung durch Pulse umfasst, der mindestens die folgenden Parameter aufweist:
- eine Strahlungswellenlänge zwischen 200 nm und 300 nm,
- eine Pulsdauer zwischen ungefähr 0,1 ns und ungefähr 5 ns, und
- eine Energie pro Puls zwischen ungefähr 5 µJ und ungefähr 100 µJ.

15. Verfahren nach Anspruch 14, **dadurch gekennzeichnet, dass** mindestens eine Gravur auf einer Fläche der ophthalmischen Linse (3) vorgenommen wird, wobei die ophthalmische Linse (3) eine vorherbestimmte Verschreibung aufweist und die Fläche keine funktionelle Behandlung aufweist.

16. Verfahren nach einem der Ansprüche 14 oder 15, **dadurch gekennzeichnet, dass** mindestens eine Gravur auf einer Fläche der ophthalmischen Linse (3) vorgenommen wird, wobei die ophthalmische Linse (3) eine vorherbestimmte Verschreibung aufweist und mit mindestens einer funktionellen Behandlung versehen ist.

## Claims

1. Device for marking an ophthalmic lens (3), said ophthalmic lens (3) being made of at least one predetermined material, including a laser (1) configured to produce permanent engravings on the ophthalmic lens (3), the device being **characterized in that** the laser (1) is configured to emit a focused pulsed beam of ultraviolet laser radiation, the focused beam having at least the following parameters:
- a radiation wavelength comprised between 200 nm and 300 nm;
- a pulse duration comprised between about 0.1 ns and about 5 ns; and
- an energy per pulse comprised between about 5 µJ and about 100 µJ,
**in that** the device includes an optical assembly (2) that includes an energy attenuator (7) configured to regulate a fluence of the beam of ultraviolet radiation focused on a surface of the ophthalmic lens (3) to be marked according to a plurality of operating modes of the attenuator (7), which modes each define a determined fluence value,
**in that** the optical assembly is further provided with an F-theta lens (9), which lens is located at the output of the optical assembly and configured to focus a beam of ultraviolet laser radiation onto a focal plane of the F-theta lens (9) with a focused beam diameter in the focal plane of the order of about 20 µm to about 50 µm,
and **in that** it further comprises an afocal system (6) placed between the laser source (1) and the attenuator (7).

2. Device according to Claim 1, **characterized in that** the focused beam furthermore has at least one of the following parameters:
- a peak power comprised between about 2.5 kW and about 1 MW; and/or
- a pulse frequency comprised between about 100 Hz and about 10 kHz.

3. Device according to either one of Claims 1 and 2, **characterized in that** the radiation wavelength of the focused ultraviolet laser beam is comprised between about 230 nm and about 290 nm and preferably about 266 nm.

4. Device according to any one of Claims 1 to 3, **characterized in that** it includes a solid-state laser source (1) configured to emit a pulsed infrared radiation beam, and a multiplier (5), positioned at the output of the laser source (1) and before the afocal system (6), and configured to multiply a radiation frequency of the infrared beam emitted as output from the laser source (1), preferably by a factor comprised between three and ten.

5. Device according to Claim 4, **characterized in that** the laser source (1) is an Nd-YAG laser and **in that** the multiplier (5) is configured to quadruple the frequency of pulses output from the Nd-YAG laser.

6. Device according to either one of Claims 4 and 5, **characterized in that** the laser source is configured to emit a pulsed beam of laser radiation having an energy per pulse comprised between about 30 µJ and about 80 µJ and preferably higher than 40 µJ.

7. Device according to any one of Claims 1 to 6, **characterized in that** the operating modes of the attenuator (7) and/or the fluence values determined for said operating modes are defined on the basis of at least one parameter of the material of the ophthalmic lens (3), which parameter is chosen from a degradation parameter and an absorbance at the wavelength of the ultraviolet radiation.

8. Device according to any one of Claims 1 to 7, **characterized in that** it is configured to be able to calibrate the attenuator (7) by determining a curve representing an energy per pulse of the focused beam, as a function of an angle of orientation of a polarized filter that the attenuator (7) includes, for a given energy per pulse at the input of the attenuator.

9. Device according to any one of Claims 1 to 8, **characterized in that** the optical assembly (2) furthermore includes a scanner head (8) configured to pilot an orientation of the beam of ultraviolet laser radiation toward the F-theta lens (9), and to pilot a position of the focused laser beam in the focal plane of the F-theta lens (9).

10. Device according to any one of Claims 1 to 9, **characterized in that** it furthermore includes, for example, a mechanism for adapting a distance between the optical assembly (2) and a holder (4) of the ophthalmic lens (3) to be marked, which adapting mechanism is configured to modify an altitude of the ophthalmic lens (3) to be marked.

11. Device according to any one of Claims 1 to 10, **characterized in that**, in use, at least one of the engravings defines a marking formed by a plurality of spots produced at a distance from one another with a predetermined separation between two consecutive spots.

12. Device according to any one of Claims 1 to 11, **characterized in that**, in use, at least one of the engravings defines a technical marking on a surface of the ophthalmic lens (3), which ophthalmic lens (3) has a predetermined prescription.

13. Device according to any one of Claims 1 to 12, **characterized in that**, in use, at least one of the engravings defines a commercial marking on a surface of the ophthalmic lens (3), which ophthalmic lens (3) has a predetermined prescription and optionally a functional treatment.

14. Process for marking an ophthalmic lens (3) produced from at least one predetermined material, the process being implemented by a device according to any one of Claims 1 to 13, and the process including a step of laser marking permanent engravings on the ophthalmic lens (3), which marking step includes a step of emitting a focused pulsed beam of ultraviolet laser radiation having at least the following parameters:
- a radiation wavelength comprised between 200 nm and 300 nm;
- a pulse duration comprised between about 0.1 ns and about 5 ns; and
- an energy per pulse comprised between about 5 µJ and about 100 µJ.

15. Process according to Claim 14, **characterized in that** the at least one engraving is produced on a surface of the ophthalmic lens (3), which ophthalmic lens (3) has a predetermined prescription and said surface is devoid of functional treatment.

16. Process according to either one of Claims 14 and 15, **characterized in that** the at least one engraving is produced on a surface of the ophthalmic lens, which ophthalmic lens has a predetermined prescription and is provided with at least one functional treatment.
